# EUROPEAN PATENT SPECIFICATION

(11) **EP 0 818 478 B1**
(45) Date of publication and mention of the grant of the patent: **11.08.2004**
(21) Application number: 96907717.1
(22) Date of filing: 29.03.1996
(51) Int. Cl.: C08F 236/10, C08F 8/42, C08F 8/30, C08F 8/34, C08F 2/06, C08L 9/06, C08L 15/00, C08K 3/36, C08K 5/54

(54) **STYRENE-ISOPRENE-BUTADIENE COPOLYMER RUBBER AND PROCESS FOR THE PRODUCTION THEREOF**
STYROL-ISOPREN-BUTADIEN-COPOLYMER-KAUTSCHUK UND VERFAHREN ZU DESSEN HERSTELLUNG
CAOUTCHOUC AU COPOLYMERE STYRENE-ISOPRENE-BUTADIENE ET SON PROCEDE DE PRODUCTION

(30) Priority: 30.03.1995 JP 9793695
(43) Date of publication of application: 14.01.1998
(73) Proprietor: ZEON CORPORATION, Chiyoda-ku Tokyo 100-8323 (JP)
(72) Inventor: NAKAMURA, Masao, Kawasaki-shi, Kanagawa 211 (JP); TAKAGISHI, Yukio, Kawasaki-shi, Kanagawa 210 (JP)
(74) Representative: Hucker, Charlotte Jane
(86) International application number: PCT/JP1996/000857
(87) International publication number: WO 1996/030419

(56) References cited:
- EP-A- 0 665 268
- EP-A- 0 698 624
- JP-A- 1 297 439
- JP-A- 2 024 333
- JP-A- 2 129 241
- JP-A- 3 072 538
- JP-A- 5 148 306
- JP-A- 6 179 730
- JP-A- 55 027 337
- JP-A- 58 079 035
- JP-A- 63 035 607

## Description

### TECHNICAL FIELD

The present invention relates to styrene-isoprene-butadiene terpolymer rubber (hereinafter abbreviated as "SIBR") which exhibits excellent heat build-up resistance, and also has excellent tensile properties, abrasion properties and processability when silica is compounded as a reinforcing agent thereinto, and a preparation process thereof. The present invention also relates to diene rubber compositions comprising the SIBR and silica.

### BACKGROUND ART

As much importance has been attached to saving in resources and countermeasures to environment in recent years, requirements to reduce fuel consumption of automobiles have been increasingly severe. Automobile tires have also been required to low their rolling resistance so as to contribute to reduction in the fuel consumption. In order to low the rolling resistance of tires, a rubber material capable of providing vulcanized rubber having low heat build-up is generally used as a rubber material for the tires.

It has heretofore been proposed to use a rubber composition obtained by compounding silica as a reinforcing agent into a diene rubber in place of carbon black so as to reduce heat build-up. However, the silica-compounded rubber composition has involved a problem that it cannot exhibit sufficient abrasion resistance and tensile strength compared with the carbon black-compounded rubber composition. A cause for this problem is considered to be attributed to the fact that the affinity of the silica for the diene rubber is lower than that of the carbon black, so that a reinforcing effect cannot be sufficiently developed.

The use of a diene rubber with a substituent having high affinity for silica introduced therein has heretofore been investigated. For example, a diene rubber with a tertiary amino group introduced therein has been proposed for a diene rubber obtained by an emulsion polymerization process (Japanese Patent Application Laid-Open No. 101344/1989). Besides, a diene rubber with an alkylsilyl group (Japanese Patent Application Laid-Open No. 188501/1989), a halogenated silyl group (Japanese Patent Application Laid-Open No. 230286/1993) or a substituted amino group (Japanese Patent Application Laid-Open No. 22940/1989) introduced therein has been proposed for a diene rubber obtained by an anionic polymerization process.

However, many of the diene rubbers with these substituents introduced therein have demerits that when silica is blended with these diene rubbers, they strongly aggregate with silica, so that the resulting diene rubber compositions become poor in processability, and that properties of the diene rubber, such as heat build-up resistance, tensile strength and abrasion resistance, are not sufficiently improved.

On the other hand, as SIBR, there have been proposed (1) SIBR containing 5-40 wt.% of bound styrene, 20-60 wt.% of bound isoprene and 10-50 wt.% of bound butadiene and having a 3,4-vinyl bond content in the isoprene moiety of 10-40 wt.% (Japanese Patent Application Laid-Open No. 53813/1990), (2) SIBR containing 6-40 wt.% of bound styrene, 20-65 wt.% of bound isoprene and 10-50 wt.% of bound butadiene and having a 3,4-vinyl bond content in the isoprene moiety of 8-50 wt.% (Japanese Patent Application Laid-Open No. 290415/1991), and (3) SIBR containing 5-20 wt.% of bound styrene, 7-35 wt.% of bound isoprene and 55-88 wt.% of bound butadiene and having a 3,4-vinyl bond content in the isoprene moiety of 10-25 wt.% (Japanese Patent Application Laid-Open No. 179730/1994).

It has been reported that these SIBRs exhibits low heat build-up and high abrasion resistance when carbon black is compounded as a reinforcing agent thereinto and are hence useful as, in particular, rubber materials for tire treads of trucks. However, these conventional SIBRs have involved drawbacks that their heat build-up resistance is not sufficiently improved when silica is compounded as a reinforcing agent thereinto, and that their tensile properties such as elongation, and abrasion properties are reversely impaired.

EP-A-0698624 discloses a process for preparing a coupled styrene-isoprene-butadiene rubber comprising the steps of (1) solution terpolymerising in an organic solvent from 5 to 40 weight percent of styrene, from 1 to 10 weight percent of isoprene, and from 50 to 94 weight percent of 1, 3-butadiene, based on the total monomers, to a conversion of at least 90% to produce a living styrene-isoprene-butadiene polymer, wherein the terpolymerisation is initiated with an organolithium compound, and wherein the terpolymerisation is conducted in the presence of a polar modifier; and (2) coupling the living styrene-isoprene-butadiene polymer with a coupling agent. In order, to inhibit gelation, the polymerisation is conducted in the presence of 1,2-butadiene and N,N,N',N' - tetramethylenediamine (TMEDA).

EP-A-0598193 discloses a process for preparing a styrene-isoprene-butadiene rubber comprising the steps of (1) continuously solution terpolymerising in an organic solvent from 5 to 20 weight percent of styrene, from 7 to 35 percent of isoprene, and from 55 to 88 weight percent of 1,3-butadiene, based on the total monomers, to a conversion which is in the range of 60 to 100%, to produce a living intermediate polymer, wherein the terpolymerisation is initiated with an organolithium compound, and then conducted in the presence of 10 to 500 ppm of 1,2-butadiene and N,N,N',N'-tetramethylene-diamine; (2) partially coupling the living intermediate polymer with a coupling agent; and (3) allowing the terpolymerisation to continue so as to produce the styrene-isoprene-butadiene rubber, and recovering the rubber from the organic solvent.

JP 60 203618 discloses the preparation of a rubber-modified styrene resin, the process comprising dissolving in a styrene monomer a polybutadiene rubber having a 1,2-vinyl bonding structure content of 20 to 40 weight percent, and a is-1,4-bonding structure content of 15 to 35 weight percent, and polymerising the resulting solution.

### DISCLOSURE OF THE INVENTION

It is an object of the present invention to provide a styrene-isoprene-butadiene terpolymer rubber which is excellent in heat build-up resistance, which is taken as an index to rolling resistance, exhibits tensile strength and abrasion resistance equal to or higher than those of a carbon black-compounded rubber composition, and also has good processability when silica is compounded as a reinforcing agent thereinto, and a preparation process thereof.

Another object of the present invention is to provide a diene rubber composition comprising a styrene-isoprene-butadiene terpolymer rubber and a silica and having excellent heat build-up resistance, tensile properties, abrasion properties and processability.

The present inventors have carried out an extensive investigation with a view toward overcoming the above-described problems involved in the prior art. As a result, it has been found that a novel styrene-isoprene-butadiene terpolymer rubber the bound isoprene content of which is as low as 0.5-10 wt.% and the vinyl bond content in the isoprene moiety of which is as high as at least 30 wt.% provides a vulcanized rubber, which exhibits excellent processability and has excellent heat build-up resistance, tensile properties, abrasion properties and the like, when silica is compounded thereinto.

Although the styrene-isoprene-butadiene copolymer rubber according to the present invention may be used alone as a rubber component, it may be used in combination with other diene rubbers in order to impart various properties balanced at a high level.

The present invention has been led to completion on the basis of these findings.

According to a first aspect of the present invention, there is thus provided a styrene-isoprene-butadiene terpolymer rubber having a terpolymer composition of a bound styrene content of 5-50 wt.%, a bound isoprene content of 0.5-10 wt.% and a bound butadiene content of 40-94.5 wt.%, a weight average molecular weight of 100,000-2,000,000, and a vinyl bond content in the isoprene moiety of at least 30 wt.%, wherein at least part of the terpolymer rubber is terminal modified with a compound having at least one functional group selected from >C =O, >C=S, amino, aziridine and epoxy groups in its molecule.

According to a second aspect of the present invention, there is also provided a process for preparing a styrene-isoprepe-butadiene terpolymer rubber having a weight average molecular weight of 100,000-2,000,000 and a vinyl bond content in the isoprene moiety of at leash 30 wt.%, which comprises copolymerizing 5-50 wt.% of styrene, 0.5-10 wt.% of isoprene and 94.5-40 wet.% of butadiene in a hydrocarbon solvent using an organic alkali metal compound as an initiator in the presence of a vinylating agent in a proportion of 0.1-100 mol per mole of the organic alkali metal compound, wherein, after the copolymerisation, the so-formed active terpolymer, which has alkali metal terminals, is reacted with a compound having at least one functional group selected from the group consisting of >C=O, >C=S, amino, aziridine and epoxy groups in its molecule, thereby terminal-modifying at least part of the active terpolymer.

According to a third aspect of the present invention, there is further provided a diene rubber composition comprising a diene rubber component composed of 10-100 wt.% of a styrene-isoprene-butadiene terpolymer rubber according to the first aspect of the present invention (A), and 0-90 wt.% of another diene rubber (B); and a reinforcing agent.

### BEST MODE FOR CARRYING OUT THE INVENTION

The present invention will hereinafter be described in detail.

### Styrene-isoprene-butadiene terpolymer rubber (SIBR)

SIBR according to the present invention is a terpolymer containing repeating units of styrene, isoprene and butadiene, and having a terpolymer composition of a bound styrene content of 5-50 wt.%, a bound isoprene content of 0.5-10 wt.% and a bound butadiene content of 40-94.5 wt.%, a weight average molecular weight of 100,000-2,000,000, and a vinyl bond content in the isoprene moiety of at least 30 wt.%, and which is terminal-modified, as described above.

The terpolymer composition of the SIBR is preferably such that the bound styrene content is 10-46 wt.%, the bound isoprene content is 1-9 wt.%, and the bound butadiene content is 45-89 wt.%, more preferably such that the bound styrene content is 15-42 wt.%, the bound isoprene content is 1-8 wt.%, and the bound butadiene content is 50-84 wt.&.

If the bound styrene content in the SIBR is too low, the tensile properties and processability of the resulting rubber composition are lowered when silica is compounded into such an SIBR. If the content is too high on the other hand, the heat build-up resistance of the resulting rubber composition is deteriorated. Therefore, such too low and too high contents are both not preferred. Besides, if the bound isoprene content in the SIBR is too low, the effects of the present invention are not exhibited. If the content is too high on the other hand, the heat build-up resistance, tensile properties and abrasion properties of the resulting rubber composition become insufficient. Therefore, such too low and too high contents are both not preferred.

The vinyl bond in the isoprene moiety in the SIBR according to the present invention may be either 1,2-vinyl bond or 3,4-vinyl bond. The total content of these vinyl bonds must be at least 30 wt.%. If the total content of these vinyl bonds is too low, the heat build-up resistance, tensile properties and processability of the resulting rubber composition are lowered when silica is compounded into such an SIBR. The upper limit of this vinyl bond content is generally about 90 wt.% because of restriction on production. Accordingly, the vinyl bond content in the isoprene moiety in the SIBR according to the present invention is generally 30-90 wt.%, preferably 35-80 wt.%, more preferably 35-70 wt.%. In general, the vinyl bond content in the isoprene moiety is mostly the 3,4-vinyl bond content. The 1,2-vinyl bond content is generally 3 wt.% or lower.

The 1,2-vinyl bond content in the butadiene moiety in the SIBR according to the present invention is generally within a range of 10-95 wt.%, preferably 30-80 wt.%, more preferably 35-75 wt.%. SIBRs the 1,2-vinyl bond content in the butadiene moiety of which falls within the above range are desirable from the viewpoint of providing a rubber composition balanced among heat build-up resistance, tensile properties and abrasion properties at a high level.

No particular limitation is imposed on the chain distribution of the bound styrene in the SIBR according to the present invention. However, styrene is preferably distributed at random to a high degree. More specifically, in the SIBR according to the present invention, a simple chain of one styrene unit is generally at least 40 wt.%, preferably at least 50 wt.%, more preferably at least 65 wt.%, of the bound styrene content. On the other hand, a long chain composed of at least 8 styrene units is at most 10 wt.%, preferably at most 5 wt.%, more preferably at most 3 wt.%, of the bound styrene content. SIBRs having such a random chain distribution of the bound styrene are desirable from the viewpoint of providing a rubber composition balanced among heat build-up resistance, tensile properties and abrasion properties at a high level.

The SIBR according to the present invention has a weight average molecular weight (Mw) ranging from 100,000 to 2,000,000, preferably from 150,000 to 1,000,000, more preferably from 180,000 to 700,000 in terms of standard polystyrene as measured by gel permeation chromatography (GPC). If the weight average molecular weight of the SIBR is too low, its heat build-up resistance and abrasion properties are lowered. If the weight average molecular weight is too high on the other hand, its tensile properties, abrasion properties and processability are deteriorated. Therefore, such too low and too high molecular weight are both not preferred.

No particular limitation is imposed on the preparation process of the SIBR according to the present invention. However, it can be obtained, for example, by copolymerizing styrene, isoprene and butadiene in a hydrocarbon solvent using an organic alkali metal compound as an initiator in the presence of a vinylating agent.

No particular limitation is imposed on the proportions of the respective monomers so far as they can satisfy the above proportions of the bound monomers (terpolymer composition) in the terpolymer rubber. However, the proportion of styrene is generally within a range of 5-50 wt.%, preferably 10-46 wt.%, more preferably 15-42 wt.%, the proportion of isoprene is generally within a range of 0.5-10 wt.%, preferably 1-9 wt.%, more preferably 1-8 wt.%, and the proportion of butadiene is generally within a range of 40-94.5 wt.%, preferably 45-89 wt.%, more preferably 50-84 wt.%, respectively.

Examples of the organic alkali metal compound include organic monolithium compounds such as n-butyllithium, sec-butyllithium, t-butyllithium, hexyllithium, phenyllithium and stilbenelithium; polyfunctional organic lithium compounds such as dilithiomethane, 1,4-dilithiobutane, 1,4-dilithio-2-ethylcyclohexane and 1,3,5-trilithiobenzene; and sodium naphthalene and potassium naphthalene. Of these, the organic lithium compounds are preferred, with the organic monolithium compounds being particularly preferred.

These organic alkali metal compounds may be used either singly or in any combination thereof. The amount of the organic alkali metal compound used is suitably selected according to the kind of the organic alkali metal compound or the weight average molecular weight required of a polymer formed. However, it is generally within a range of 1-20 mmol, preferably 2-15 mmol, more preferably 3-10 mmol per 1,000 g of the mixture of the monomers.

Anionic polymerization making use of the above initiator (catalyst) is performed in a hydrocarbon solvent which does not decompose the initiator. No particular limitation is imposed on a suitable hydrocarbon solvent so far as it is that used in usual anionic polymerization. Examples thereof include aliphatic hydrocarbons such as n-butane, n-pentane, iso-pentane, n-hexane, n-heptane and iso-octane; alicyclic hydrocarbons such as cyclopentane, cyclohexane and methylcyclopentane; and aromatic hydrocarbons such as benzene and toluene. Of these, n-hexane, cyclohexane and benzene are preferred. Besides, an unsaturated hydrocarbon having low polymerizability, such as 1-butene, cis-2-butene or 2-hexene, may be used as needed. These hydrocarbon solvents may be used either singly or in any combination thereof in such a proportion that the concentration of the monomers is generally 1-30 wt.%.

No particular limitation is imposed on the vinylating agent so far as it is that used in usual anionic polymerization. Examples thereof include polar compounds, such as ethers such as tetrahydrofuran, diethyl ether, dioxane, ethylene glycol dimethyl ether, ethylene glycol dibutyl ether, diethylene glycol dimethyl ether and diethylene glycol dibutyl ether; tertiary amine compounds such as tetramethylethyleneamine, trimethylamine, triethylamine, pyridine and quinuclidine; alkali metal alkoxide compounds such as potassium-t-amyl oxide and potassium-t-butyl oxide; phosphine compounds such as triphenylphosphine.

These vinylating agents may be used either singly or in any combination thereof. The amount of the vinylating agent used is suitably selected according to the kind of the vinylating agent used and the vinyl bond content in SIBR required of the SIBR. However, it is generally within a range of 0.1-100 mol, preferably 0.32-50 mol, more preferably 0.35-10 mol per mol of the organic alkali metal compound. If the amount of the vinylating agent used is too little, it is impossible to increase the vinyl bond content in the isoprene moiety in the polymer formed, resulting in SIBR deteriorated in properties such as heat build-up resistance, tensile strength and processability. On the other hand, any used amount of the vinylating agent too great involves problems that the catalyst is deactivated at an early time.

The polymerization reaction is generally preformed in a temperature range of from -78°C to 150°C under a polymerization style such as a batch process or a continuous process. In order to enhance the randomness of bound styrene chain distribution, it is desirable to continuously or intermittently supply the conjugated diene monomers (butadiene and isoprene) or a mixture of the conjugated diene monomers and styrene in such a manner that the styrene content in the compositional ratio of styrene to the conjugated diene monomers in the polymerization system reaches a concentration range at most twice as much as the bound styrene content in the resulting SIBR as described in, for example, Japanese Patent Application Laid-Open Nos. 140211/1984 and 143209/1981.

After completion of the polymerization reaction, the polymerization reaction is terminated in accordance with a method known *per se* in the art, for example, by adding an alcohol such as methanol or isopropanol as a terminator, an antioxidant such as the phenolic or phosphorous type and a crumb-forming agent are added, and the solvent is removed by a method such as stripping, whereby a polymer formed can be recovered.

In the present invention, an active terpolymer (a terpolymer having alkali metal terminals) before the addition of the terminator is reacted with a modifier as defined below, and/or optionally with a coupling agent. Various kinds of coupling agents disclosed in, for example, Japanese Patent Application Laid-Open No. 143209/1981, 17362/1981, 55912/1982 and 162605/1983 may be used as the coupling agent. On the other hand, various kinds of modifies disclosed in, for example, Japanese Patent Application Laid-Open No. 191705/1984, 137913/1985, 109801/1987, 149708/1987, 86074/1987 and 22940/1989 may be used as the modifier. By the coupling and/or modification of SIBR, properties of the SIBR, such as tensile properties, heat build-up, abrasion properties and processability, can be balanced with one another at a higher level.

More specifically, examples of the coupling agent may include metal compounds represented by the following formulae (i) to (iv):

(i) RₖMX₄₋ₖ

(ii) M'X₂

(iii) X₃M-R'-MX₃

(iv) X₂RM-R'-MRX₂

In these formulae, R means an alkyl, alkoxy or aryl group. R' denotes an alkylene or phenylene group. M stands for Si, Ge, Sn or Pb, and M' represents Sn or Pb. X means chlorine, bromine or iodine. k stands for an integer of 0-4.

Specific examples of the coupling agents represented by the above formulae include tin tetrachloride, tin dichloride, tin tetrabromide, silicon tetrachloride, silicon tetrabromide, silicon tetraiodide, germanium tetrachloride, lead dichloride, methyltrichlorosilane, dimethyldichlorosilane, butyltrichlorosilane, dibutyl-dichlorosilane, bis(trichlorosilyl)ethane, bis(trichlorostannyl)ethane, tetramethoxysilicon, tetramethoxytin, tetraethoxysilicon, tetraethoxytin, tetrabutoxysilicon and tetrabutoxytin.

Examples of coupling agents other than those represented by the above formulae include unsaturated nitriles such as ethylacrylonitrile; dihalogenated hydrocarbons such as dibromobenzene, dichlorobenzene and dibromoethylene; carboxylates such as dimethyl adipate, diethyl adipate, ethyl benzoate, dimethyl terephthalate, diethyl terephthalate, dimethyl phthalate and dimethyl isophthalate; carboxylic acid halides such as terephthalic acid dichloride, phthalic acid dichloride, isophthalic acid dichloride and adipic acid dichloride; and carbon tetrachloride.

Of these, the tin compounds and silicon compounds are preferred as the coupling agent, with tin tetrachloride, tetramethoxytin, tetrabutoxytin, silicon tetrachloride and tetramethoxysilicon being particularly preferred.

These coupling agent may be used either singly or in any combination thereof. The amount of the coupling agent used is suitably selected according to the weight average molecular weight and coupling rate required of the resulting polymer and reactivity of the coupling agent used. However, it is generally within a range of 0.1-10 equivalents, preferably 0.1-5 equivalent, more preferably 0.1-2 equivalents to the active terpolymer. The coupling reaction is almost quantitatively carried out and generally under reaction conditions of 0-150°C and 0.5-20 hours. The coupling rate may be suitably selected. However, it is generally within a range of 10-100%. The coupling rate can be determined from an area ratio of high molecular weight to low molecular weight in a differential refractometer by GPC measurement.

In the present invention, a compound having at least one functional group selected from among >C=O, >C=S, amino, aziridine and epoxy groups in its molecule is used as the modifier. This compound contains at least one of these functional groups in its molecule.

A compound having at least one >C=O or >C=S group in its molecule is preferred as the modifier, with a compound having at least one >C=O or >C=S group and at least one substituted amino group in combination being more preferred. The >C=O or >C=S and the substituted amino group may adjoin or separate from each other. Examples of compounds having these functional groups in an adjoined relation include amides, imides, ureas and isocyanuric acids having a - C(=O)-N< bond or -C(=S)-N< bond, and thio compounds corresponding to these compounds. Cyclic compounds having these functional groups are preferred, with N-substituted cyclic amides and N-substituted cyclic ureas being more preferred. Examples of compounds having these functional groups in a separated relation include N-substituted aminoketones and N-substituted aminoaldehydes, and thio compounds corresponding to these compounds. The N-substituted aminoketones and N-substituted aminoaldehydes are preferred, the N-substituted aminoketones being more preferred.

Specific preferable examples of these compounds include N-substituted cyclic amides such as N-methyl-β-propiolactam, N-phenyl-β-propiolactam, N-methyl-2-pyrrolidone, N-vinyl-2-pyrrolidone, N-phenyl-2-pyrrolidone, N-t-butyl-2-pyrrolidone, N-methyl-5-methyl-2-pyrrolidone, N-methyl-2-piperidone, N-vinyl-2-piperidone, N-phenyl-2-piperidone, N-methyl-ε-caprolactam, N-phenyl-ε-caprolactam, N-methyl-ω-laurylolactam and N-vinyl-ω-laurylolactam; N-substituted cyclic ureas such as 1,3-dimethylethyleneurea, 1,3-divinylethyleneurea, 1,3-diethyl-2-imidazolidinone and 1-methyl-3-ethyl-2-imidazolidinone; N-substituted aminoketones such as 4-N,N-dimethyl-aminoacetophenone, 4-N,N-diethylaminoacetophenone, 1,3-bis(diphenylamino)-2-propanone, 1,7-bis(methylethylamino)-4-heptanone, 4-N,N-dimethylaminobenzophenone, 4-N,N-di-t-butylaminobenzophenone, 4-N,N-diphenylaminobenzophenone, 4,4'-bis(dimethylamino)benzophenone, 4,4'-bis-(diethylamino)-benzophenone and 4,4'-bis(diphenylamino)benzophenone; N-substituted aminoaldehydes such as 4-N,N-dimethylaminobenzaldehyde, 4-N,N-diphenylaminobenzaldehyde and 4-N,N-divinylaminobenzaldehyde; and isocyanates, such as aromatic polyisocyanates such as phenyl isocyanate, 2,4-tolylene diisocyanate, 2,6-tolylene diisocyanate, diphenylmethane diisocyanate, naphthalene diisocyanate and aromatic polyisocyanate which is dimers or trimers of these diisocyanates. Of these, 4,4'-bis(dimethylamino) benzophenone, 4,4'-bis(diethylamino)benzophenone, 4,4'-bis(diphenylamino)benzophenone, N-methyl-ε-caprolactam, N-methyl-2-pyrrolidone, N-vinyl-2-pyrrolidone, N-phenyl-2-pyrrolidone and N-vinyl-2-piperidone are preferred.

Compounds having an amino group, aziridine group, epoxy group or the like may be used as the modifier. Examples of the compounds separately having an amino group, aziridine group and epoxy group may include carbodiimides, aziridines and epoxy compounds, respectively.

Examples of the carbodiimides include dimethylcarbodiimide, diethylcarbodiimide, dipropylcarbodiimide, dibutylcarbodiimide, dihexylcarbodiimide, dicyclohexylcarbodiimide, dibenzylcarbodiimide, diphenylcarbodiimide, methylpropylcarbodiimide, butylcyclohexylcarbodiimide, ethylbenzylcarbodiimide, propylphenylcarbodiimide and phenylbenzylcarbodiimide. Of these, dicylcohexylcarbodiimide and diphenylcarbodiimide are preferred.

Examples of the aziridines include N-unsubstituted aziridines such as ethyleneimine and propyleneimine.

Examples of the epoxy compounds include ethylene oxide, propylene oxide, 1,2-epoxybutane, 1,2-epoxy-iso-butane, 2,3-epoxybutane, 1,2-epoxyhexane, 1,2-epoxyoctane, 1,2-epoxydecane, 1,2-epoxytetradecane, 1,2-epoxyhexadecane, 1,2-epoxyoctadecane, 1,2-epoxyeicosane, 1,2-epoxy-2-pentylpropane, 3,4-epoxy-1-butene, 1,2-epoxy-5-hexene, 1,2-epoxy-9-decene, 1,2-epoxycyclopentane, 1,2-epoxycyclohexane, 1,2-epoxycyclododecane, 1,2-epoxyetylbenzene, 1,2-epoxy-1-methoxy-2-methylpropane, glycidyl methyl ether, glycidyl ethyl ether, glycidyl isopropyl ether, glycidyl allyl ether, glycidyl phenyl ether, glycidyl butyl ether, 2-(3,4-epoxycyclohexyl)ethyltrimethoxysilane and 3-glycidyloxypropyltrimethoxysilane. Of these, ethylene oxide, propylene oxide, 1,2-epoxybutane, 1,2-epoxy-iso-butane, 2,3-epoxybutane, 1,2-epoxyhexane, 3,4-epoxy-1-butene, 1,2-epoxy-5-hexene, glycidyl methyl ether, glycidyl ethyl ether, glycidyl isopropyl ether, glycidyl allyl ether, glycidyl phenyl ether, glycidyl butyl ether and 3-glycidyloxypropyltrimethoxysilane are preferred, with ethylene oxide, propylene oxide, 1,2-epoxybutane, 1,2-epoxy-iso-butane, 2,3-epoxybutane and 1,2-epoxyhexane being more preferred.

These modifiers may be used either singly or in any combination thereof. The amount of the modifier used is suitably selected according to the kind of the modifier used and properties required of the resulting polymer. However, it is generally within a range of 0.1-50 equivalents, preferably 0.1-20 equivalents, more preferably 0.1-10 equivalents to the active terpolymer.

Since the modification reaction almost quantitatively progresses by bring the active terpolymer into contact with the modifier, the reaction is generally performed by adding a predetermined amount of the modifier to the reaction mixture containing the active terpolymer before termination of the polymerization. The reaction temperature and time may be widely selected. However, the reaction is generally conducted at room temperature to 120°C for several seconds to several hours. In general, the modification rate is suitably selected from among a range of 10-100%. The modification rate can be determined by measuring an absorption intensity by a differential refractometer (RI) and a spectrophotometer for ultraviolet and visible region (UV) to find a ratio (UV)/RI) of the respective intensities and comparing the value with a calibration curve prepared in advance.

In the present invention, a part of the active terpolymer having alkali metal terminals may be coupled with the coupling agent, and the unreacted portion thereof may be modified with the modifier. Accordingly, the SIBR according to the present invention includes terminal-modified SIBR and terminal-modified and coupled SIBR.

A combination of the coupled SIBR and the terminal-modified SIBR is particularly preferred from the viewpoint of well balancing the effects of the present invention. No particular limitation is imposed on the mixing proportion thereof. In general, however, the proportion of the coupled SIBR is within a range of 10-90 wt.%, preferably 15-75 wt.%, more preferably 20-60 wt.%, while the proportion of the terminal-modified SIBR is within a range of 90-10 wt.%, preferably 85-25 wt.%, more preferably 80-40 wt.%. The unmodified SIBR subjected to neither coupling nor terminal modification may be mixed as needed. However, the mixing proportion thereof is generally at most 30 wt.%, preferably at most 20 wt.%, more preferably at most 10 wt.%. Although the SIBR mixture may be obtained by mixing the respective SIBRs separately prepared, it can be obtained, for example, by reacting the coupling agent in a proportion of 0.1-0.9 equivalents, preferably 0.15-0.75 equivalents, more preferably 0.2-0.6 equivalents to the active terpolymer, and then reacting the unreacted portion of the active terpolymer with the modifier. At this time, the amount of the modifier used is generally within a range of 0.1-10 equivalents, preferably 0.25-5 equivalents, more preferably 0.4-2 equivalents.

### Another diene rubber:

The SIBR (A) according to the present invention may be used singly as the diene rubber component, but may be used in combination with another diene rubber (B). When used in combination with another diene rubber (B), a proportion of the SIBR (A) in the diene rubber component is suitably selected according to the application and purpose of the resulting diene rubber composition. However, the SIBR is used in a proportion of at least 10 wt.%, preferably, within a range of 20-80 wt.%, more preferably, within a range of 30-70 wt.%. Namely, a ratio (by weight) of the SIBR (A) to another diene rubber (B) is 10:90 to 100:0, preferably 20:80 to 80:20, more preferably 30:70 to 70:30. If the proportion of the SIBR (A) used is too low, it is difficult to achieve a sufficient improving effect. It is hence not preferable to use the SIBR (A) in such a low proportion.

Examples of another diene rubber (B) include natural rubber (NR), polyisoprene rubber (IR), emulsion-polymerized styrene-butadiene copolymer rubber (SBR), solution-polymerized random SBR (bound styrene: 5-50 wt.%; 1,2-bond content of butadiene moiety: 10-80%), high-trans SBR (trans content of butadiene moiety: 70-95%), low-cis polybutadiene rubber (BR), high-cis BR, high-trans BR (trans content of butadiene moiety: 70-95%), styrene-isoprene copolymer rubber (SIR), butadiene-isoprene copolymer rubber, emulsion-polymerized styrene-acrylonitrile-butadiene terpolymer rubber, acrylonitrile-butadiene copolymer rubber, high-vinyl SBR-low-vinyl SBR block copolymer rubber, and block copolymers such as polystyrene-polybutadiene-polystyrene block copolymers. The diene rubber may be suitably selected from among these diene rubbers according to properties required of the resulting rubber composition.

These diene rubbers (B) may be used either singly or in any combination thereof. Among these, NR, BR, IR and SBR are preferred. NR and IR are particularly preferred from the viewpoint of processability.

When the SIBR (A) and another diene rubber (B) are used in combination, preferable compositions include a combined system of the diene rubbers, composed of the SIBR (A) and [NR and/or IR] at a ratio (by weight) of 20:80 to 80:20, preferably 30:70 to 70:30, and a combined system of the diene rubbers, composed of the SIBR (A), [NR and/or IR] and SBR at a ratio (by weight) of 80-20:10-70:10-70.

### Reinforcing agent:

No particular limitation is imposed on the reinforcing agent used in the present invention so far as it can be used industrially. Examples thereof include silica, carbon black, calcium carbonate, talc and clay. Of these, silica is preferred. When silica is used in combination with carbon black, properties of the resulting diene rubber composition, such as tensile strength, abrasion resistance and processability on roll, are improved at a higher level. It is preferable to use such reinforcing agents in combination. The amount of the reinforcing agent used is suitably selected according to the kind of the reinforcing agent used. However, it is generally 10-250 parts by weight, preferably 20-200 parts by weight, more preferably 30-150 parts by weight per 100 parts by weight of the diene rubber component.

### (Silica)

As the silica used in the present invention, any silica commonly used for compounding into general-purpose rubber may be used. Specific examples thereof include dry process white carbon, wet process white carbon, colloidal silica and precipitated silica disclosed in Japanese Patent Application Laid-Open No. 62838/1987, which are generally used as a reinforcing agent. Of these, wet process white carbon comprising hydrous silicic acid as a main component is preferred.

No particular limitation is imposed on the specific surface area of the silica. However, it is generally within a range of 50-400 m²/g, preferably 100-250 m²/g, more preferably 120-190 m²/g in terms of a specific surface area determined by nitrogen absorption (BET method). If the specific surface area of the silica is too small, its reinforcing ability becomes poor. On the other hand, any specific surface area too large results in a diene rubber composition deteriorated in processability and insufficiently improved in abrasion resistance and heat build-up resistance. The specific surface area determined by nitrogen absorption as used herein is a value determined by the BET method in accordance with ASTM D 3037-81.

No particular limitation is imposed on the proportion of the silica used. However, the silica is generally used in a proportion of 20-150 parts by weight, preferably 30-120 parts by weight, more preferably 40-100 parts by weight, per 100 parts by weight of the diene rubber component. If the proportion of the silica used is too low, its reinforcing ability is not sufficiently exhibited. On the other hand, any proportion too high results in an unvulcanized rubber composition having an increased viscosity and hence deteriorated in processability.

### (Carbon black)

When silica and carbon black are used in combination as a reinforcing agent in the diene rubber composition according to the present invention, its properties such as tensile strength, abrasion resistance and processability on roll can be improved at a high level.

No particular limitation is imposed on the carbon black used so far as it is that commonly used. Examples thereof include furnace black, acetylene black, thermal black, channel black and graphite. Of these, furnace black is particularly preferred. Specific examples thereof include various grades of carbon black such as SAF, ISAF, ISAF-HS, ISAFLS, IISAF-HS, HAF, HAF-HS, HAF-LS and FEF.

In order to enhance abrasion properties, carbon black having a small particle size and a high structure is used. However, such carbon black is poor in dispersibility and also in heat build-up resistance. Therefore, it is preferable to add such carbon black in a small amount so as to well balance the abrasion properties with the heat build-up resistance. When much importance is attached to the heat build-up resistance, it is preferable to use carbon black having a great particle size or small surface activity, or fibrous graphite. The compounding proportion thereof is generally 0.5-60 parts by weight, preferably 1-50 parts by weight, more preferably 5-40 parts by weight, per 100 parts by weight of the diene rubber component. When much importance is attached to abrasion properties, it is preferable to use carbon black having a primary particle size of 5-30 nm (such as SAF or ISAF). Since such carbon black deteriorates the heat build-up resistance of the resulting diene rubber composition, however, the compounding proportion thereof is generally 1-40 parts by weight, preferably 5-30 parts by weight, more preferably 10-20 parts by weight, per 100 parts by weight of the diene rubber component. In order to provide a diene rubber composition well balanced between abrasion properties and heat build-up resistance, it is preferable to use carbon black having a primary particle diameter of about 30-60 nm (such as HAF, FEF or SRF). The compounding proportion thereof is generally 1-50 parts by weight, preferably 5-40 parts by weight, more preferably 10-30 parts by weight, per 100 parts by weight of the diene rubber component. When the carbon black is used in combination with the silica, the resulting diene rubber composition can be well balanced among processability, heat-build up resistance, abrasion properties and the like. Therefore, one or more kinds of carbon black can be used according to the purpose of improvement.

### Silane coupling agent:

When a silane coupling agent is added in the present invention, the affinity of the diene rubber component for the silica is enhanced, so that the heat build-up resistance and abrasion resistance of the resulting diene rubber composition are further improved. It is hence preferable to use the silane coupling agent.

Various kinds of well-known silane coupling agents may be used as the silane coupling agent. Representative examples thereof include vinyltrichlorosilane, vinyltriethoxysilane, vinyltris(β-methoxy-ethoxy)silane, β-(3,4-epoxycyclohexyl)-ethyltrimethoxysilane, γ-glycidoxypropyltrimethoxysilane, γ-glycidoxypropylmethyldiethoxysilane, γ-methacryloxy-propyltrimethoxysilane, N-(β-aminoethyl)-γ-aminopropyltrimethoxysilane, N- (β-aminoethyl)-γ-aminopropylmethyldimethoxysilane, N-phenyl-γ-aminopropyltrimethoxysilane, γ-chloropropyltrimethoxysilane, γ-mercaptopropyltrimethoxysilane, γ-aminopropyltriethoxysilane, bis(3-(triethoxysilyl)propyl) tetrasulfide, and tetrasulfides described in Japanese Patent Application Laid-Open No. 248116/1994, such as γ-trimethoxysilylpropyldimethylthiocarbamyl tetrasulfide and γ-trimethoxysilylpropylbenzothiazyl tetrasulfide.

A proportion of the silane coupling agent used is generally within a range of 0.1-30 parts by weight, preferably 1-20 parts by weight, more preferably 2-10 parts by weight, per 100 parts by weight of the silica.

### Rubber composition:

The rubber compositions according to the present invention can be obtained by kneading the individual components in accordance with a method known *per se* in the art. In addition to the above-described components, the rubber compositions according to the present invention may contain necessary amounts of other compounding agents such as vulcanizing agents, vulcanization accelerators, vulcanization aids, antioxidants, activators, plasticizers, lubricants and fillers in accordance with a method known *per se* in the art.

Other compounding agents include those commonly used in the rubber industry, for example, vulcanizing agents such as sulfur and peroxides; vulcanization accelerators such as thiazole, thiuram, sulfenamide and guanidine types; vulcanization aides such as stearic acid and zinc white; coupling agents other than the silane coupling agents; activators such as diethylene glycol, polyethylene glycol and silicone oil; and fillers, plasticizers, antioxidants and process oil. Necessary compounding agents may be suitably selected from among these various compounding agents according to the purposes and applications of the resulting diene rubber compositions.

When the individual components are kneaded, at least parts of the diene rubber component and silica are first mixed by means of a mixer such as a roll or Banbury, and the remaining compounding agents are then added and mixed, whereby a diene rubber composition improved in dispersibility and having far excellent properties can be provided. In this case, the addition of silica may be conducted in a lot. However, when a predetermined amount of the silica is added in preferably two or more portions, the silica can be easily dispersed, so that the silica can be more easily mixed with the diene rubber component. For example, 10-90 wt.% of the whole amount of the silica may be added on the first time, and the remainder may be added on and after the second time.

Although the silane coupling agent and activator among the other compounding agents may be added upon the first mixing of the rubber component with the silica as needed, the other additives may preferably be added on and after the subsequent step. When the vulcanization aid, vulcanization accelerator and the like are added upon the first mixing of the rubber component with the silica, in some cases, the mixing time may be lengthened, and the reinforcing ability of the silica may be lowered.

The temperature at which the diene rubber component and silica are mixed is generally 80-200°C, preferably 100-190°C, more preferably 140-180°C. If the temperature is too low, the abrasion properties are not very improved. If the temperature is too high on the other hand, burning of the rubber component occurs. Therefore, both too low and too high mixing temperatures are not preferred. The mixing is generally conducted for at least 30 seconds, preferably 1-30 minutes.

### EXAMPLES

The present invention will hereinafter be described more specifically by the following Preparation Examples, Examples and Comparative Examples. Incidentally, all designations of "part" or "parts" and "%" as will be used in these examples mean part or parts by weight and wt.% unless expressly noted.

Various properties and microstructures of polymers were determined in accordance with the following respective methods:

### (1) Bound styrene content:

The bound styrene content in each test sample was determined in accordance with JIS K 6383 (refractive index method).

### (2) Vinyl bond content in butadiene moiety:

The vinyl bond content in the butadiene moiety in each test sample was determined in accordance with an infrared spectroscopy (Hampton method).

### (3) Bound isoprene content and vinyl bond content in isoprene moiety:

The bound isoprene content in each test sample, and the 3,4-vinyl bond content and 1,2-vinyl bond content in the isoprene moiety were determined by NMR measurement.

### (4) Styrene chain distribution:

With respect to the styrene chain distribution in each test sample, the sample was subjected to ozone degradation and then to GPC measurement, thereby determining proportions of a simple chain (S1) of one styrene unit and a long chain (S8) composed of at least 8 styrene units.

### (5) Weight average molecular weight:

The weight average molecular weight of each test sample was determined by conducting GPC measurement to find its weight average molecular weight in terms of standard polystyrene.

### (6) Coupling rate:

GPC measurement on each test sample was conducted to determine the coupling rate in the test sample by an area ratio of high molecular weight to low molecular weight on a chart in a differential refractometer (RI).

### (7) Tensile strength and the like:

The tensile strength, elongation, stress at 300% elongation, etc. of each test sample were determined in accordance with the tensile testing method described in JIS K 6301.

### (8) Heat build-up resistance (tan δ index at 60°C)

The heat build-up resistance of each test sample was determined by measuring tan δ at 0.5% torsion, 20 Hz and 60°C by means of an RDA-II manufactured by Rheometric Co. This heat build-up property was expressed in terms of an index (tan δ index at 60°C). The higher index indicates better heat build-up resistance.

### (9) Abrasion resistance:

The abrasion resistance of each test sample was determined by means of a Pico abrasion tester in accordance with ASTM D 2228. This property is expressed in terms of an index (Pico abrasion index). The higher index indicates better abrasion resistance.

### (10) Processability

The processability of each test sample was determined by observing winding tendency of the sample on a roll, and evaluated in accordance with the following standard:
ⓞ: Wound closely;
○: Wound, but slightly rose to the surface of the roll;
Δ: Wound, but frequently rose to the surface of the roll;
×: Scarcely wound.

### [Comparative Preparation Example A]

A 15-liter autoclave equipped with a stirrer was charged with 8,000 g of cyclohexane, 360 g of styrene, 720 g of butadiene, and 15 mmol of ethylene glycol dibutyl ether (EGDBE) and further charged with 15 mmol of n-butyllithium (n-BuLi) to initiate polymerization at 60°C. In the course of the polymerization, 1,080 g of butadiene were continuously added over 60 minutes. After 1.5 mmol of stannic chloride (SnCl₄) were added at the time the conversion of the monomers into a polymer had reached 100% to conduct a reaction for 20 minutes, 15 mmol of denatured alcohol were added to terminate the polymerization reaction. After 2,6-tert-butyl-hydroxytoluene (BHT) was added in a proportion of 0.5 parts per 100 parts of the polymer formed, the solvent was removed by stripping, and the residue was then dried under reduced pressure for 24 hours to obtain a copolymer rubber (Comparative sample A).

### [Comparative Preparation Example B]

A 15-liter autoclave equipped with a stirrer was charged with 8,000 g of cyclohexane, 360 g of styrene, 720 g of butadiene, 100 g of isoprene and 25 mmol of tetramethylethylenediamine (TMEDA) and further charged with 15 mmol of n-butyllithium (n-BuLi) to initiate polymerization at 50°C. In the course of the polymerization, a liquid mixture of 40 g of styrene and 780 g of butadiene was continuously added over 60 minutes. Denatured alcohol in an amount of 15 mmol was added at the time the conversion of the monomers into a polymer had reached 100% to terminate the polymerization reaction. After 2,6-tert-butyl-hydroxytoluene (BHT) was added in a proportion of 0.5 parts per 100 parts of the polymer formed, the solvent was removed by stripping, and the residue was then dried under reduced pressure for 24 hours to obtain a copolymer rubber (Comparative Sample B).

### [Comparative Preparation Examples C & D]

After polymerization was conducted in the same manner as in Comparative Preparation Example B, their corresponding coupling agents shown in Table 1 were respectively added in an equivalent amount to n-butyllithium to react them for 20 minutes. Thereafter, polymers formed were recovered in the same manner as in Comparative Preparation Example B. Properties of the copolymer rubbers (Comparative Samples C and D) thus obtained are shown in Table 1.

### [Preparation Example E & F]

After reactions were respectively conducted in the same manner as in Comparative Preparation Example B except for their corresponding reaction conditions shown in Table 1, their corresponding modifiers shown in Table 1 were added in an equivalent amount to n-butyllithium to react them for 30 minutes. Thereafter, polymers formed were recovered in the same manner as in Comparative Preparation Example B. Properties of the copolymer rubbers (Samples E and F) thus obtained are shown in Table 1.

### [Preparation Example G]

After a reaction was conducted in the same manner as in Comparative Preparation Example B except for its corresponding reaction conditions shown in Table 1, 1.5 mmol of stannic chloride (SnCl₄) were added to conduct a reaction for 20 minutes, and 75 mmol of butadiene were added to conduct a reaction for 15 minutes. Further, 10 mmol of 4,4'-bis(diethylamino)benzophenone (EAB) were added to conduct a reaction for 30 minutes. Thereafter, a polymer formed was recovered in the same manner as in Comparative Preparation Example B. Properties of the copolymer rubber (Sample G) thus obtained are shown in Table 1.

### [Preparation Example H]

Dimethylamine (DMA) and n-butyllithium were reacted with each other in cyclohexane to obtain a compound represented by the general formula (CH₃)₂N⁻Li⁺. A polymerization reaction, a coupling reaction and a modification reaction were conducted in the same manner as in Preparation Example G except that this compound was used as a polymerization initiator, and the modifier was changed to N-vinylpyrrolidone (NVP). Properties of the copolymer rubber (Sample H) thus obtained are shown in Table 1.

These copolymer rubbers (Samples E to H) are all SIBRs according to the present invention.

**Tablet 1**

| | Sample number | | | | | | |
|---|---|---|---|---|---|---|---|
| | B | C | D | E | F | G | H |
| First monomer | | | | | | | |
| styrene (g) | 360 | 360 | 360 | 360 | 360 | 360 | 360 |
| Butadiene (g) | 720 | 720 | 720 | 720 | 720 | 720 | 620 |
| Isopcene (g) | 100 | 100 | 100 | 100 | 50 | 75 | 100 |
| TMEDA (*1) (nmol) | 25 | 25 | - | - | - | - | - |
| RGDBE (*2) (nmol) | - | - | 15 | 15 | 15 | 15 | 15 |
| n-BuLi (nmol) | 15 | 15 | 15 | 15 | 15 | 15 | 15(*3) |
| Reaction temperature (°C) | 50 | 50 | 60 | 60 | 60 | 60 | 60 |

| Monomer for subsequent addition | | | | | | | |
|---|---|---|---|---|---|---|---|
| Styrene (g) | 40 | 40 | 40 | 40 | 40 | 40 | 40 |
| Butadiene (g) | 780 | 780 | 780 | 780 | 780 | 780 | 880 |
| isoprene (g) | - | - | - | - | 50 | 25 | - |
| Addition time (min) | 60 | 60 | 60 | 60 | 70 | 50 | 70 |
| Kind of coupling agent (*4) | - | Si(CMe)₄ | SnCL₄ | - | - | SnCL₄ | SnCl₄ |
| Coupling agent (nmol) | - | 3.75 | 3.75 | - | - | 1.5 | 1.5 |
| Kind of modifier (*5) | - | - | - | EAB | EO | FAB | NVP |
| Modifier (mnol) | - | - | - | 15 | 15 | 10 | 10 |

| Physical properties and microstructure | | | | | | | |
|---|---|---|---|---|---|---|---|
| Bound styrene content (wt.%) | 20.1 | 20.3 | 20.1 | 20.0 | 20.9 | 20.5 | 20.9 |
| Bound isoprene content (wt.%) | 5.1 | 5.1 | 5.5 | 5.3 | 5.2 | 5.5 | 5.4 |
| 3,4-Vinyl content in IP (wt.%) | 58.3 | 57.6 | 58.5 | 58.5 | 56.3 | 57.0 | 56.3 |
| 1,2-Vinyl content in IP (wt.%) | 1.6 | 2.1 | 2.2 | 2.2 | 2.3 | 2.0 | 2.3 |
| 1.2-Vinyl content in Bt (wt.%) | 61.2 | 61.5 | 61.0 | 60.8 | 58.8 | 60.4 | 58.8 |
| S1 (*6) (%) | 85.6 | 86.2 | 86.0 | 86.8 | 87.0 | 85.9 | 89.0 |
| S8≥ (*7)(%) | 0.6 | 0.5 | 0.7 | 0.7 | 0.4 | 0.8 | 0.5 |
| Mw (x 10⁴) | 21.0 | 65.5 | 64.2 | 20.5 | 44.7 | 40.3 | 44.7 |

| | | | | | | | |
|---|---|---|---|---|---|---|---|
| (* 1) Tetramethylethylenediamine | | | | | | | |
| (*2) Ethylene glycol dibutyl ether | | | | | | | |
| (*3) Equimolar reaction product of n-BuLi and dimethylamine | | | | | | | |
| (*4) Coupling agents: Si(OMe)₄ = tetramethoxysilane, SnCl₄ = Stannic chloride | | | | | | | |
| (*5) Modifiers: EAB = 4,4'-bis(diethylamino)benzophenone, EO = ethylene oxide, NVP = N-vinylpyrrolidone | | | | | | | |
| (*6) Simple chain of one styrene unit | | | | | | | |
| (*7) Long chain of at least 8 styrene units | | | | | | | |

### [Preparation Examples I-K]

Polymerization reactions were respectively conducted in the same manner as in Sample G except for their corresponding conditions shown in Table 2, thereby obtaining SIBRs (Samples I-K). Properties of these SIBRs are shown in Table 2.

**Table 2**

| | Sample number | | |
|---|---|---|---|
| | I | J | K |
| First monomer | | | |
| styrene (g) | 360 | 360 | 360 |
| Butadiene (g) | 720 | 720 | 720 |
| Isoprene (g) | 20 | 50 | 140 |
| BGDBE (*1) (mmol) | 30, | 30 | 30 |
| n-BuLi (mnol) | 10 | 10 | 10 |
| Reaction temperature (°C) | 40 | 40 | 40 |

| Manomer for subsequent addition | | | |
|---|---|---|---|
| Styrene (g) | 40 | 40 | 40 |
| Butadiene (g) | 860 | 780 | 740 |
| isoprene (g) | - | 50 | - |
| Addition time (min) | 60 | 60 | 60 |
| Kind of coupling agent (*2) | Si(OMe)₄ | Si(OMe)₄ | Si(OMe)₄ |
| Coupling agent (mmol) | 1.2 | 1.2 | 1.2 |
| Kind of modifier (*3) | AST | PRI | DAK |
| Modifier (mmol) | 4 | 4 | 4 |

| Physical properties and microstructure | | | |
|---|---|---|---|
| Bound styrene contient (wt.%) | 20.1 | 20.3 | 20.0 |
| Bound isoprene content (wt.%) | 1.2 | 5.2 | 7.0 |
| 3.4-Vinyl content in IP (wt.%) | 63.1 | 65.0 | 64.5 |
| 1.2-Vinyl content in IP (wt.%) | 2.3 | 2.1 | 2.3 |
| 1,2-Vinyl content in Bt (wt.%) | 69.5 | 70.1 | 68.2 |
| S1 (*4) (%) | 75.6 | 76.2 | 75.9 |
| S8 ≥ (*5)(%) | 0.2 | 0.1 | 0.1 |
| Mw (x10⁴) | 83.5 | 84.4 | 85.0 |

| | | | |
|---|---|---|---|
| (*1) Ethylene glycol dibutyl ether | | | |
| (*2) Si(OMe)₄ = tetramethoxysilane | | | |
| (*3) Modifiers: AST = dimethylaminomethylstyrene, PRI = propyleneimine, DAK = N,N'-dimethylaminophenyl ketone | | | |
| (*4) Simple chain of one styrene unit | | | |
| (*5) Long chain of at least 8 styrene units | | | |

### [Comparative Example 1]

The copolymer rubber prepared in Comparative Preparation Example A was used as raw rubber to perform the following process in accordance with Formulation 1 shown in Table 3.

After the raw rubber was masticated at 120°C for 30 seconds in a 250-cc Banbury mixer, silica and a silane coupling agent in amounts shown in Table 3, and 2 parts of an activator were added to knead the mixture. After kneading for 2 minutes, the other compounding agents except for sulfur and a sulfur vulcanization accelerator were added to knead the mixture further for 2 minutes. The maximum temperature attained was about 170°C. The mixture thus obtained, sulfur and the vulcanization accelerator were then added to an open roll controlled at 50°C to knead them. The kneaded mixture was then press-vulcanized at 160°C for 25 minutes to produce test pieces, thereby determining various physical properties thereof. The results are shown in Table 4.

**Table 5**

| Formulation 1 | Amount compounded (parts) | | |
|---|---|---|---|
| | First | Second | Third |
| Raw rubber | 100 | - | - |
| Silica | Varied amount | - | - |
| Silane coupling agent | Varied amount | - | - |
| Activator (*1) | 2 | - | - |
| Zinc white | - | 3 | - |
| Stearic acid | - | 2 | - |
| Antioxidant (*2) | - | 1 | - |
| Vulcanization accelerator(*3) | - | - | 1 |
| Vulcanization accelerator(*4) | - | - | 1 |
| Sulfur | - | - | 1.7 |

| | | | |
|---|---|---|---|
| (*1) Diethylene glycol (product of Wako Pure Chemical Industries, Ltd.) | | | |
| (*2) Nocrac 6C (product of Ouchi-Shinko Chemical Industrial Co., Ltd.) | | | |
| (*3) Nocceler CZ (product of Ouchi-Shinko Chemical Industrial Co., Ltd.) | | | |
| (*4) Nocceler D (product of Ouchi-Shinko Chemical Industrial Co., Ltd.) | | | |

**Table 4**

| | Comp. Ex. |
|---|---|
| | 1 |
| Sample No. | A |
| Bound styrene content (wt.%) | 20.3 |
| Bound isoprene content (wt.%) | 0.0 |
| Vinyl content in IP (*1) (wt.%) | - |
| Kind of silica (*2) | AQ |
| Silica (parts) | 60 |
| Silane coupling agent (*3) (parts) | 3.5 |
| Tensile strength (Kgf/cm²) | 125 |
| Elongation (%) | 330 |
| Stress at 300% (Kgf/cm²) | 95 |
| tan δ index at 60°C (*4) index | 100 |
| Pico abrasion (*4) | 100 |
| Processabllity on roll | Δ |

| | |
|---|---|
| (*1) Total content of 3,4-vinyl bond content and 1,2-vinyl- bond content | |
| (*2) Silica AQ = Nipsil AQ (product of Nippon Silica Industrial Co., Ltd.; specific surface area determined by nitrogen absorption = 200 m²/g) VN = Ultrasil VN3G (product of Degussa AG; specific surface area determined by nitrogen absorption = 175 m²/g) | |
| (*3) Si69 (product of Degussa AG) | |
| (*4) Expressed in terms of an index assuming that the value of Comparative Example 1 is 100. | |

### [Comparative Examples 2-4 and Examples 5-8]

The copolymer rubbers prepared in Preparation Examples B-H were respectively used as raw rubber, and Ultrasil VN3G (product of Degussa AG; specific surface area determined by nitrogen absorption = 175 m²/g) was used as silica, thereby conducting kneading in a 250-ml Banbury mixer in accordance with their corresponding compounding recipe (Formulation 2) shown in Table 5. First, the whole amount of the raw rubber, a half amount of the silica, a part of an activator (diethylene glycol) and a silane coupling agent (Si69) were kneaded at 160°C for 2 minutes, and the other compounding agents except for sulfur and a vulcanization accelerator were then added to knead the mixture for 2.5 minuets at the same temperature. The mixture thus obtained, sulfur and the vulcanization accelerator were then added to an open roll controlled at 50°C to knead them. The kneaded mixture was then press-vulcanized at 160°C for 30 minutes to produce test pieces, thereby determining various physical properties thereof. The results are shown in Table 7.

### [Examples 9 & 10]

Reference Sample D and Sample E were used in combination as raw rubber, and silica and carbon black were used in combination as a reinforcing agent in accordance with the compounding recipe (Formulation 3) shown in Table 6, thereby conducting the following process. First, the whole amounts of the raw rubber, silica, an activator and a silane coupling agent were kneaded at 160°C for 2 minutes in a 250-ml Banbury mixer, and the other compounding agents except for sulfur and a vulcanization accelerator were then added to knead the mixture for 2.5 minuets at the same temperature. The mixture thus obtained, sulfur and the vulcanization accelerator were then added to an open roll controlled at 50°C to knead them. The kneaded mixture was then press-vulcanized at 160°C for 30 minutes to produce test pieces, thereby determining various physical properties thereof. The results are shown in Table 7.

**Table 5**

| Formulation 2 | Amount compounded (parts) | | |
|---|---|---|---|
| | First | Second | Third |
| Raw rubber | 100 | - | - |
| Silica | Half amount | Half amount | - |
| Activator (*1) | 1 | 2 | - |
| Silane coupling agent | 2 | - | - |
| Process oil | - | 10 | - |
| Zinc white | - | 3 | - |
| Stearic acid | - | 2 | - |
| Sulfur | - | - | 1.6 |
| Vulcanization accelerator(*2) | - | - | 1 |
| Vulcanization accelerator(*3) | - | - | 1 |

| | | | |
|---|---|---|---|
| (*1) Diethylene glycol (product of Wako Pure Chemical Industries, Ltd.) | | | |
| (*2) Nocceler CZ (product of Ouchi-Shinko Chemical Industrial Co., Ltd.) | | | |
| (*3) Nocceler D (product of Ouchi-Shinko Chemical Industrial Co., Ltd.) | | | |

**Table 6**

| Formulation 3 | Amount compounded (parts) | | |
|---|---|---|---|
| | First | Second | Third |
| Raw rubber | 100 | - | - |
| Silica | Whole amount | - | - |
| Activator (*1) | 1 | - | - |
| Silane coupling agent | 2 | - | - |
| Carbon black (*2) | - | 20 | - |
| Process oil | - | 10 | - |
| Zinc white | - | 5 | - |
| Stearic acid | - | 3 | - |
| Sulfur | - | - | 1.6 |
| Vulcanization accelerator(*3) | - | - | 1 |
| Vulcanization accelerator(*4) | - | - | 1 |

| | | | |
|---|---|---|---|
| (*1) Diethylene glycol (product of Wako Pure Chemical Industries, Ltd.) or denatured silicone oil (FZ3704, product of Nippon Unicar Co., Ltd.) | | | |
| (*2) Seast KH (product of Tokai Carbon Co., Ltd.) | | | |
| (*3) Nocceler CZ (product of Ouchi-Shinko Chemical Industrial Co., Ltd.) | | | |
| (*4) Nocceler D (product of Ouchi-Shinko Chemical Industrial Co., Ltd.) | | | |

**Tablet 7**

| | Comp. Examples | | | Example | | | | | |
|---|---|---|---|---|---|---|---|---|---|
| | 2 | 3 | 4 | 5 | 6 | 7 | 8 | 9 | 10 |
| Diene rubber component (parts) | | | | | | | | | |
| | | | | | | | | | |
| Reference Sample B | 60 | 60 | 40 | - | - | - | - | - | - |
| Reference Sample C | 40 | - | - | - | - | - | - | - | - |
| Reference Sample D | - | 40 | 60 | 60 | 40 | - | - | 40 | 40 |
| Sample E | - | - | -- | 40 | - | - | - | 60 | 60 |
| Sample F | - | - | - | - | 60- | - | - | - | - |
| Sample G | - | - | - | - | - | 100 | - | - | - |
| sample H | - | - | - | - | - | - | 100 | - | - |
| Silica (*1) (parts) | 60 | 60 | 60 | 60 | 60 | 60 | 60 | 40 | 40 |
| Activator (*2) (parts) | 3 | 3 | 3 | 3 | 3 | 3 | 3 | 1 | - |
| Activator (*3) (parts) | - | - | - | - | - | - | - | - | 1 |
| Silane coupling agent (*4) (parts) | 2 | 2 | 2 | 2 | 2 | 2 | 2 | 2 | 2 |
| Carbon black (*5) (parts) | - | - | - | - | - | - | - | 20 | 20 |
| Tensile strength (Kgf/cm²) | 160 | 160 | 166 | 173 | 170 | 185 | 192 | 200 | 230 |
| Elongation (%) | 350 | 400 | 380 | 420 | 350 | 430 | 400 | 400 | 420 |
| Stress at 300%. (Kgf/cm²) | 101 | 120 | 133 | 151 | 125 | 155 | 148 | 148 | 150 |
| tan δ index at 60°C (*6) | 155 | 145 | 144 | 135 | 118 | 155 | 148 | 151 | 148 |
| Pico abrasion index (*6) | 115 | 105 | 122 | 123 | 114 | 142 | 134 | 168 | 189 |
| Processability on roll | ○ | ○ | ○ | ⓞ | ○ | ○ | ○ | ⓞ | ⓞ |

| | | | | | | | | | |
|---|---|---|---|---|---|---|---|---|---|
| (*1) Ultrasil VN3G (product of Degussa AG; specific surface area determined by nitrogen absorption = 175 m²/g) | | | | | | | | | |
| (*2) Diethylene glycol (product of Wako Pure Chemical Industries, Ltd.) | | | | | | | | | |
| (*3) Denatured silicone oil (FZ3704, product of Nippon Unicar Co., Ltd.) | | | | | | | | | |
| (*4) Si69 (product of Degussa AG) | | | | | | | | | |
| (*5) Sheathed KH (product of Tokai Carbon Co., Ltd.) | | | | | | | | | |
| (*6) Expressed in terms of an index assuming that the value of Comparative Example 1 shown in Table 4 is 100. | | | | | | | | | |

It is understood from the results shown in Table 7 that the diene rubber compositions (Examples 5-10) making use of the SIBRs according to the present invention are excellent in all properties of tensile properties, heat build-up resistance, abrasion properties and processability. It is also understood that when silica and carbon black are used in combination as a reinforcing agent (Examples 9 & 10), tensile strength, abrasion resistance and processability are further improved.

### [Examples 11-13, Comparative Example 5]

The copblymer rubbers prepared in Preparation Examples I to K and the copolymer rubber prepared in Comparative Preparation Example A were respectively used as raw rubber, and Z1165MP (product of Rhone-Poulenc S.A.; specific surface area determined by nitrogen absorption = 175 m²/g) was used as silica, thereby kneading them in a 250-cc Banbury mixer in accordance with the compounding recipe (Formulation 4) shown in Table 8. First, the whole amount of the raw rubber, and parts of the silica and a silane coupling agent (S169) were kneaded at 160°C for 2 minutes, and the other compounding agents except for sulfur and a vulcanization accelerator were added to knead the mixture for 2.5 minuets at the same temperature. The mixture thus obtained, sulfur and the vulcanization accelerator were then added to an open roll controlled at 50°C to knead them. The kneaded mixture was then press-vulcanized at 160°C for 30 minutes to produce test pieces, thereby determining various physical properties thereof. The results are shown in Table 9.

**Table 8**

| Formulation 4 | Amount compounded (parts) | | |
|---|---|---|---|
| | First | Second | Third |
| Raw rubber | 100 | - | - |
| Silica | 40 | 30 | - |
| Silane coupling agent | 4 | 2 | - |
| Zinc white | - | 1 | - |
| Stearic acid | - | 2 | - |
| Oil | - | 30 | - |
| Wax | - | 5 | - |
| Vulcanization accelerator (*1) | - | - | 3 |
| Sulfur | - | - | 1.7 |

| | | | |
|---|---|---|---|
| (*1) Nocceler CZ (product of Ouchi-Shinko Chemical Industrial Co., Ltd.) | | | |

**Table 9**

| | Example | | | Comp. Ex. |
|---|---|---|---|---|
| | 11 | 12 | 13 | 5 |
| Sample No. | I | J | K | A |
| Bound styrene content (wt.%) | 20.1 | 20.3 | 20.0 | 20.3 |
| Bound isoprene content (wt.%) | 1.2 | 5.2 | 7.0 | 0.0 |
| Vinylcontent in IP (*1) (wt.%) | 65.4 | 67.1 | 66.8 | - |
| Silica (*2) (parts) | 70 | 70 | 70 | 70 |
| Silane coupling agent (*3) (parts) | 6 | 6 | 6 | 6 |
| Tensile strength (Kgf/cm²) | 210 | 227 | 215 | 182 |
| Elongation (%) | 460 | 470 | 460 | 420 |
| Stress at 300% (Kgf/cm²) | 130 | 135 | 130 | 125 |
| tan δ index at 60°C (*4) | 115 | 118 | 116 | 100 |
| Pico abrasion index (*4) | 105 | 107 | 107 | 100 |
| Processability on roll | ⓞ | ⓞ | ⓞ | ○ |

| | | | | |
|---|---|---|---|---|
| (*1) Total content of 3,4-vinyl bond content and 1,2-vinyl-bond content | | | | |
| (*2) Z1165MP (product of Rhone-Poulenc S.A.; specific surface area determined by nitrogen absorption = 175 m²/g) | | | | |
| (*3) Si69 (product of Degussa AG) | | | | |
| (*4) Expressed in terms of an index assuming that the value of Comparative Example 5 is 100. | | | | |

### INDUSTRIAL APPLICABILITY

According to the present invention, there are provided SIBRs which exhibit excellent heat build-up resistance and also have excellent tensile properties, abrasion properties and processability when silica is compounded as a reinforcing agent thereinto, and a preparation process thereof. According to the present invention, there are also provided diene rubber compositions in which tensile strength and abrasion resistance, which have hitherto been weak points of silica-compounded rubber materials, can be highly improved without impairing good heat build-up resistance which constitutes a feature of such rubber materials, and which have excellent processability and the like.

The diene rubber compositions according to the present invention can be used in various fields of applications, for example, various parts for tires, such as treads, carcasses, sidewalls and beads; rubber products such as hoses, window frames, belts, shoe soles, rubber vibration insulators and automobile parts; and further toughening rubbers for resins such as impact-resistant polystyrene and ABS resins, making good use of their excellent properties.

Although the diene rubber compositions according to the present invention are excellently suitable for use, in particular, as rubber materials for tire treads of fuel consumption-reducing tires, they are also suitable for use as rubber materials for tire treads, sidewalls, under treads, carcasses, beads and the like of all-season tires, high performance tires, studless tires, etc.

## Claims

1. A styrene-isoprene-butadiene terpolymer rubber having a terpolymer composition of a bound styrene content of 5-50 wt.%, a bound isoprene content of 0.5-10 wt.% and a bound butadiene content of 40-94.5 wt.%, a weight average molecular weight of 100,000-2,000,000, and a vinyl bond content in the isoprene moiety of at least 30 wt . %, wherein at least part of the terpolymer rubber is terminal-modified with a compound having at least one functional group selected from the group consisting of >C=O, >C=S, amino, aziridine and epoxy groups in its molecule.

2. The terpolymer rubber according to Claim 1, wherein a simple chain of one styrene unit is at least 40 wt-% of the bound styrene content, and a long chain composed of at least 8 styrene units is at most 10 wt.% of the bound styrene content.

3. The terpolymer rubber according to Claim 1 or Claim 2, wherein the 1,2-vinyl bond content in the butadiene moiety is 10-95 wt.%.

4. The terpolymer rubber according to any preceding Claim, wherein at least part of the terpolymer rubber is coupled with a coupling agent.

5. The terpolymer rubber according to Claim 4, wherein the coupling agent is at least one selected from the group consisting of metal compounds represented by the following formulae (i) to (iv):
(i) RₖM₄₋ₖ
(ii) M'x₂
(iii) X₃M-R' -MX₃
(iv) X₂RM-R'-MRX₂
wherein R means an alkyl, alkoxy or aryl group, R' denotes an alkylene or phenylene group, M stands for Si, Ge, Sn or Pb, M' represents Sn or Pb, X means chlorine, bromine or iodine, and k stands for an integer of 0-4.

6. The terpolymer rubber according to any preceding Claim, wherein the compound having a functional group is an N-substituted cyclic amide, N-substituted cyclic urea, N-substituted aminoketone, N-substituted aminoaldehyde, isocyanate, carbodiimide, aziridine or epoxy compound.

7. The terpolymer rubber according to any preceding Claim, wherein the modification rate is 10-100%.

8. The terpolymer rubber according to Claim 4, wherein 10-90 wt. % of the terpolymer rubber is coupled with the coupling agent, 90-10 wt. % of the terpolymer rubber is terminal-modified with the compound having a functional group, and at most 30 wt.% of the terpolymer rubber is neither coupled nor terminal-modified.

9. A process for preparing a styrene-isoprene-butadiene terpolymer rubber having a weight average molecular weight of 100,000-2,000,000, and a vinyl bond content in the isoprene moiety of at least 30 wt.%, which comprises copolymerizing 5-50 wt. % of styrene, 0.5-10 wt.% of isoprene and 94.5-40 wt.% of butadiene in a hydrocarbon solvent using an organic alkali metal compound as an initiator in the presence of a vinylating agent in a proportion of 0.1-100 mol per mole of the organic alkali metal compound, wherein, after the copolymerization, the so-formed active terpolymer, which has alkali metal terminals, is reacted with a compound having at least one functional group selected from the group consisting of >C=O, >C=S, amino, aziridine and epoxy groups in its molecule, thereby terminal-modifying at least part of the active terpolymer.

10. The preparation process according to Claim 9, wherein, after the copolymerization, the so-formed active terpolymer, which has metal terminals, is reacted with a coupling agent, thereby coupling at least part of the terpolymer, and is then reacted with the compound having a functional group, thereby terminal-modifying at least part of the terpolymer.

11. The preparation process according to Claim 10, wherein 10-90 wt. % of the terpolymer rubber is coupled with the coupling agent, 90-10 wt. % of the terpolymer rubber is terminal-modified with the compound having a functional group, and at most 30 wt.% of the terpolymer rubber is neither coupled nor terminal-modified.

12. A diene rubber composition comprising a diene rubber component composed of 10-100 wt. % of a styrene isoprene-butadiene terpolymer rubber (A) having a terpolymer composition of a bound styrene content of 5-50 wt. %, a bound isoprene content of 0.5-10 wt. % and a bound butadiene content of 40-94.5 wt. %, a weight average molecular weight of 100,000-2,000,000, and a vinyl bond content in the isoprene moiety of at least 30 wt. %, and 0-90 wt. % of another diene rubber (B); and a reinforcing agent, wherein at least part of the terpolymer rubber (A) is terminal-modified with a compound having at least one functional group selected from the group consisting of >C=O, >C=S, amino, aziridine and epoxy groups in its molecule.

13. The diene rubber composition according to Claim 12, wherein at least part of the terpolymer rubber (A) is coupled with a coupling agent.

14. The diene rubber composition according to Claim 13, wherein 10-90 wt. % of the terpolymer rubber (A) is coupled with the coupling agent, 90-10 wt. % of the terpolymer rubber (A) is terminal-modified with the compound having a functional group, and at most 30 wt. % of the terpolymer rubber (A) is neither coupled nor terminal-modified.

15. The diene rubber composition according to any of Claims 12 to 14, wherein the reinforcing agent is compounded in a proportion of 10-250 parts by weight per 100 parts by weight of the diene rubber component.

16. The diene rubber composition according to any of Claims 12 to 15, wherein the reinforcing agent is silica.

17. The diene rubber composition according to any of Claims 12 to 15, which comprises silica and carbon black as the reinforcing agent.

18. The diene rubber composition according to Claim 17, wherein silica and carbon black are contained in proportions of 20-150 parts by weight and 0.5-60 parts by weight per 100 parts by weight of the diene rubber component.

19. The diene rubber composition according to Claim 17 or Claim 18, wherein the reinforcing agent is at least one selected from the group consisting of dry process white carbon, wet process white carbon, colloidal silica and precipitated silica.

20. The diene rubber composition according to any of Claims 16 to 18, wherein a specific surface area of the silica as determined by nitrogen absorption (BET method) is within a range of 50-400 M₂/g.

21. The diene rubber composition according to any of Claims 12 to 20, which further comprises a silane coupling agent.

22. The diene rubber composition according to any of Claims 12 to 21, wherein the ratio of the terpolymer rubber (A) to another diene rubber (B) to be blended is 20:80 to 80:20 (by weight).

23. The diene rubber composition according to any of Claims 12 to 22, wherein the said another diene rubber (B) is at least one selected from the group consisting of natural rubber, polyisoprene rubber, styrene-butadiene copolymer rubber, polybutadiene rubber, styrene-isoprene copolymer rubber and butadiene-isoprene copolymer rubber.

## Patentansprüche

1. Styrol-Isopren-Butadien-Terpolymerkautschuk mit einer Terpolymerzusammensetzung mit einem gebundenen Styrolgehalt von 5 bis 50 Gew.-%, einem gebundenen Isoprengehalt von 0,5 bis 10 Gew.-% und einem gebundenen Butadiengehalt von 40 bis 94,5 Gew.-%, einem Gewichtsmittel des Molekulargewichts von 100.000 bis 2.000.000 und einem Vinylbindungsgehalt in der Isoprenkomponente von mindestens 30 Gew.-%, worin mindestens ein Teil des Terpolymerkautschuks endständig modifiziert ist mit einer Verbindung mit mindestens einer funktionellen Gruppe ausgewählt aus der Gruppe bestehend aus >C=O, >C=S, Amino-, Aziridin- und Epoxygruppen im Molekül.

2. Terpolymerkautschuk nach Anspruch 1, worin eine einfache Kette von einer Styroleinheit mindestens 40 Gew.-% des gebundenen Styrolgehalts ausmacht und eine lange Kette aus mindestens 8 Styroleinheiten höchstens 10 Gew.-% des gebundenen Styrolgehalts ausmacht.

3. Terpolymerkautschuk nach Anspruch 1 oder Anspruch 2, worin der 1,2-Vinylbindungsgehalt in der Butadienkomponente 10 bis 95 Gew.-% beträgt.

4. Terpolymerkautschuk nach irgendeinem vorhergehenden Anspruch, worin mindestens ein Teil des Terpolymerkautschuks mit einem Kupplungsmittel gekuppelt ist.

5. Terpolymerkautschuk nach Anspruch 4, worin das Kupplungsmittel mindestens eines ausgewählt aus der Gruppe bestehend aus Metallverbindungen ist, die durch die folgenden Formeln (i) bis (iv) dargestellt sind:
(i) RₖM₄₋ₖ
(ii) M'X₂
(iii) X₃M-R'-MX₃
(iv) X₂RM-R'-MRX₂
worin R eine Alkyl-, Alkoxy- oder Arylgruppe bedeutet, R' eine Alkylen- oder Phenylengruppe bezeichnet, M für Si, Ge, Sn oder Pb steht, M' Sn oder Pb darstellt, X Chlor, Brom oder lod bedeutet und k für eine ganze Zahl von 0 bis 4 steht.

6. Terpolymerkautschuk nach irgendeinem vorhergehenden Anspruch, worin die Verbindung mit einer funktionellen Gruppe ein N-substituiertes, cyclisches Amid, ein N-substituierter, cyclischer Harnstoff, ein N-substituiertes Aminoketon, ein N-substituierter Aminoaldehyd, Isocyanat, Carbodiimid, Aziridin oder eine Epoxyverbindung ist.

7. Terpolymerkautschuk nach irgendeinem vorhergehenden Anspruch, worin die Modifizierungsrate 10 bis 100% beträgt.

8. Terpolymerkautschuk nach Anspruch 4, worin 10 bis 90 Gew.-% des Terpolymerkautschuks mit dem Kupplungsmittel gekuppelt sind, 90 bis 10 Gew.-% des Terpolymerkautschuks endständig modifiziert sind mit der Verbindung mit einer funktionellen Gruppe und höchstens 30 Gew.-% des Terpolymerkautschuks weder gekuppelt noch endständig modifiziert sind.

9. Verfahren zur Herstellung eines Styrol-Isopren-Butadien-Terpolymerkautschuks mit einem Gewichtsmittel des Molekulargewichts von 100.000 bis 2.000.000 und einem Vinylbindungsgehalt in der Isoprenkomponente von mindestens 30 Gew.-%, welches das Copolymerisieren von 5 bis 50 Gew.-% Styrol, 0,5 bis 10 Gew.-% Isopren und 94,5 bis 40 Gew.-% Butadien in einem Kohlenwasserstoff-Lösungsmittel unter Verwendung einer organischen Alkalimetallverbindung als Initiator in Anwesenheit eines Vinylierungsmittels in einem Anteil von 0,1 bis 100 Mol pro Mol der organischen Alkalimetallverbindung umfasst, worin nach der Copolymerisation das so gebildete aktive Terpolymer, das Alkalimetall-Endgruppen aufweist, mit einer Verbindung mit mindestens einer funktionellen Gruppe ausgewählt aus der Gruppe bestehend aus >C=O, >C=S, Amino-, Aziridin- und Epoxygruppen im Molekül umgesetzt wird, wodurch mindestens ein Teil des aktiven Terpolymers endständig modifiziert wird.

10. Herstellungsverfahren nach Anspruch 9, worin nach der Copolymerisation das so gebildete aktive Terpolymer, das Metallendgruppen aufweist, mit einem Kupplungsmittel umgesetzt wird, wodurch mindestens ein Teil des Terpolymers gekuppelt wird, und dann mit der Verbindung mit einer funktionellen Gruppe umgesetzt wird, wodurch mindestens ein Teil des Terpolymers endständig modifiziert wird.

11. Herstellungsverfahren nach Anspruch 10, worin 10 bis 90 Gew.-% des Terpolymerkautschuks mit dem Kupplungsmittel gekuppelt werden, 90 bis 10 Gew.-% des Terpolymerkautschuks endständig modifiziert werden mit der Verbindung mit einer funktionellen Gruppe und höchstens 30 Gew.-% des Terpolymerkautschuks weder gekuppelt noch endständig modifiziert werden.

12. Dienkautschuk-Zusammensetzung umfassend eine Dienkautschuk-Komponente aus 10 bis 100 Gew.-% eines Styrol-Isopren-Butadien-Terpolymerkautschuks (A) mit einer Terpolymerzusammensetzung mit einem gebundenen Styrolgehalt von 5 bis 50 Gew.-%, einem gebundenen Isoprengehalt von 0,5 bis 10 Gew.-% und einem gebundenen Butadiengehalt von 40 bis 94,5 Gew.-%, einem Gewichtsmittel des Molekulargewichts von 100.000 bis 2.000.000 und einem Vinylbindungsgehalt in der Isoprenkomponente von mindestens 30 Gew.-% und 0 bis 90 Gew.-% eines anderen Dienkautschuks (B) und ein Verstärkungsmittel, worin mindestens ein Teil des Terpolymerkautschuks (A) mit einer Verbindung mit mindestens einer funktionellen Gruppe ausgewählt aus der Gruppe bestehend aus >C=O, >C=S, Amino-, Aziridinund Epoxygruppen im Molekül entständig modifiziert ist.

13. Dienkautschuk-Zusammensetzung nach Anspruch 12, worin mindestens ein Teil des Terpolymerkautschuks (A) mit einem Kupplungsmittel gekuppelt ist.

14. Dienkautschuk-Zusammensetzung nach Anspruch 13, worin 10 bis 90 Gew.-% des Terpolymerkautschuks (A) mit dem Kupplungsmittel gekuppelt sind, 90 bis 10 Gew.-% des Terpolymerkautschuks (A) mit der Verbindung mit einer funktionellen Gruppe endständig modifiziert sind und höchstens 30 Gew.-% des Terpolymerkautschuks (A) weder gekuppelt noch endständig modifiziert sind.

15. Dienkautschuk-Zusammensetzung nach irgendeinem der Ansprüche 12 bis 14, worin das Verstärkungsmittel in einem Verhältnis von 10 bis 250 Gew.-Teilen pro 100 Gew.-Teilen der Dienkautschuk-Komponente eincompoundiert ist.

16. Dienkautschuk-Zusammensetzung nach irgendeinem der Ansprüche 12 bis 15, worin das Verstärkungsmittel Kieselsäure ist.

17. Dienkautschuk-Zusammensetzung nach irgendeinem der Ansprüche 12 bis 15, welches Kieselsäure und Ruß als Verstärkungsmittel umfasst.

18. Dienkautschuk-Zusammensetzung nach Anspruch 17, worin die Kieselsäure und der Ruß in Anteilen von 20 bis 150 Gew.-Teilen und 0,5 bis 60 Gew.-Teilen pro 100 Gew.-Teilen der Dienkautschuk-Komponente enthalten sind.

19. Dienkautschuk-Zusammensetzung nach Anspruch 17 oder Anspruch 18, worin das Verstärkungsmittel mindestens eines ausgewählt aus der Gruppe bestehend aus Trockenverfahren-Weißruß, Nassverfahren-Weißruß, kolloidaler Kieselsäure und gefällter Kieselsäure ist.

20. Dienkautschuk-Zusammensetzung nach irgendeinem der Ansprüche 16 bis 18, worin die spezifische Oberfläche der Kieselsäure bestimmt durch Stickstoffabsorption (BET-Verfahren) im Bereich von 50 bis 400 m²/g beträgt.

21. Dienkautschuk-Zusammensetzung nach irgendeinem der Ansprüche 12 bis 20, welche ferner einen Silan-Haftvermittler umfasst.

22. Dienkautschuk-Zusammensetzung nach irgendeinem der Ansprüche 12 bis 21, worin das Verhältnis des Terpolymerkautschuks (A) zu einem anderen Dienkautschuk (B), die zu mischen sind, 20:80 bis 80:20 (bezogen auf das Gewicht) beträgt.

23. Dienkautschuk-Zusammensetzung nach irgendeinem der Ansprüche 12 bis 22, worin der andere Dienkautschuk (B) mindestens einer ausgewählt aus der Gruppe bestehend aus Naturkautschuk, Polyisoprenkautschuk, Styrol-Butadien-Copolymerkautschuk, Polybutadienkautschuk, Styrol-Isopren-Copolymerkautschuk und Butadien-Isopren-Copolymerkautschuk ist.

## Revendications

1. Caoutchouc terpolymère styrène-isoprène-butadiène ayant une composition terpolymère d'une quantité de styrène lié de 5 - 50 % en poids, une quantité d'isoprène lié de 0,5 - 10 % poids et une quantité de butadiène lié de 40 - 94,5 % en poids, une masse moléculaire moyenne en poids de 100 000 - 2 000 000, et une quantité de vinyle lié dans le groupement isoprène d'au moins 30 % en poids, dans lequel au moins une partie du caoutchouc terpolymère est modifié en extrémité par un composé ayant au moins un groupe fonctionne! choisi dans le groupe constitué par les groupes >C=O, >C=S, amino, azididine et époxy dans sa molécule.

2. Caoutchouc terpolymère selon la revendication 1, dans lequel une chaîne simple d'une unité styrène est au moins 40 % en poids de la quantité de styrène lié, et une longue chaîne composée d'au moins 8 unités styrène est au plus 10 % en poids de la quantité de styrène lié.

3. Caoutchouc terpolymère selon la revendication 1 ou la revendication 2, dans lequel la quantité de 1,2-vinyle lié dans le groupement butadiène est 10 - 95 % en poids.

4. Caoutchouc terpolymère selon l'une quelconque des revendications précédentes, dans lequel au moins une partie du caoutchouc terpolymère est couplée avec un agent de couplage.

5. Caoutchouc terpolymère selon la revendication 4, dans lequel l'agent de couplage en est au moins un choisi dans le groupe constitué par des composés métalliques représentés par les formules suivantes (i) à (iv) :
(i) RₖM₄₋ₖ
(ii) M'X₂
(iii) X₃M-R-MX₃
(iv) X₂RM-R'-MRX₂
dans lesquelles R signifie un groupe alkyle, alcoxy ou aryle, R' signifie un groupe alkylène ou phénylène, M signifie Si, Ge, Sn ou Pb, M' représente Sn ou Pb, X signifie le chlore, le brome ou l'iode, et k signifie un nombre entier de 0 - 4.

6. Caoutchouc terpolymère selon l'une quelconque des revendications précédentes, dans lequel le composé ayant un groupe fonctionnel est un composé amide cyclique N-substitué, urée cyclique N-substituée, aminocétone N-substituée, aminoaldéhyde N-substitué, isocyanate, carbodiimide, aziridine ou époxy.

7. Caoutchouc terpolymère selon l'une quelconque des revendications précédentes, dans lequel le taux de modification est 10 -100 %.

8. Caoutchouc terpolymère selon la revendication 4, dans lequel 10 - 90 % en poids du caoutchouc terpolymère est couplé avec un agent de couplage, 90 - 10 % en poids du caoutchouc terpolymère est modifié en extrémité par le composé ayant un groupe fonctionnel, et au plus 30 % en poids du caoutchouc terpolymère est ni couplé ni modifié en extrémité.

9. Procédé de préparation d'un terpolymère styrène-isoprène-butadiène ayant une masse moléculaire moyenne en poids de 100 000 - 2 000 000, et une quantité de vinyle lié dans le groupement isoprène d'au moins 30 % en poids, qui comprend la copolymérisation de 5 - 50 % en poids de styrène, 0,5 - 10 % en poids d'isoprène et 94,5 - 40 % en poids de butadiène dans un solvant hydrocarboné en utilisant un composé organique de métal alcalin comme initiateur en présence d'un agent de vinylation en une proportion de 0,1 - 100 moles par mole du composé organique de métal alcalin, dans lequel, après la copolymérisation, on fait réagir le terpolymère actif ainsi formé; qui présente des extrémités de métal alcalin, avec un composé ayant au moins un groupe fonctionnel choisi dans le groupe constitué par les groupes >C=O, >C=S, amino, azididine et époxy dans sa molécule, en modifiant ainsi en extrémité au moins une partie du terpolymère actif.

10. Procédé de préparation selon la revendication 9, dans lequel, après la copolymérisation, on fait réagir le terpolymère actif ainsi formé, qui présente des extrémités de métal, avec un agent de couplage, en couplant ainsi au moins une partie du terpolymère, et on le fait réagir ensuite avec le composé ayant un groupe fonctionnel, en modifiant ainsi en extrémité au moins une partie du terpolymère.

11. Procédé de préparation selon la revendication 10, dans lequel 10 - 90 % en poids du caoutchouc terpolymère est couplé avec l'agent de couplage, 90 - 10 % en poids du caoutchouc terpolymère est modifié en extrémité par le composé ayant un groupe fonctionnel, et au plus 30 % en poids du caoutchouc terpolymère est ni couplé ni modifié en extrémité.

12. Composition de caoutchouc diène comprenant un composant de caoutchouc diène composé de 10 - 100 % en poids d'un caoutchouc terpolymère (A) styrène-isoprène-butadiène ayant une composition terpolymère d'une quantité de styrène lié de 5 - 50 % en poids, une quantité d'isoprène lié de 0,5 - 10 % poids et une quantité de butadiène lié de 40 - 94,5 % en poids, une masse moléculaire moyenne en poids de 100 000 - 2 000 000, et une quantité de vinyle lié dans le groupement isoprène d'au moins 30 % en poids, et 0 - 90 % en poids d'un autre caoutchouc diène (B) ; et un agent renforçant, dans laquelle au moins une partie du caoutchouc terpolymère (A) est modifiée en extrémité par un composé ayant au moins un groupe fonctionnel choisi dans le groupe constitué par les groupes >C=O, >C=S, amino, azididine et époxy dans sa molécule.

13. Composition de caoutchouc diène selon la revendication 12, dans laquelle au moins une partie du caoutchouc terpolymère (A) est couplée avec un agent de couplage.

14. Composition de caoutchouc diène selon la revendication 13, dans laquelle 10 - 90 % en poids du caoutchouc terpolymère (A) est couplé avec l'agent de couplage, 90 - 10 % en poids du caoutchouc terpolymère (A) est modifié en extrémité par le composé ayant un groupe fonctionnel, et au plus 30 % en poids du caoutchouc terpolymère (A) est ni couplé ni modifié en extrémité.

15. Composition de caoutchouc diène selon l'une quelconque des revendications 12 à 14, dans laquelle l'agent renforçant est mélangé en une proportion de 10 - 250 parties en poids pour 100 parties en poids du composant caoutchouc diène.

16. Composition de caoutchouc diène selon l'une quelconque des revendications 12 à 15, dans laquelle l'agent renforçant est la silice.

17. Composition de caoutchouc diène selon l'une quelconque des revendications 12 à 15, qui comprend de la silice et du noir de carbone comme agent renforçant.

18. Composition de caoutchouc diène selon la revendication 17, dans laquelle la silice et le noir de carbone sont contenus dans des proportions de 20 - 150 parties en poids et 0,5 - 60 parties en poids pour 100 parties en poids du composant caoutchouc diène.

19. Composition de caoutchouc diène selon la revendication 17 ou la revendication 18, dans laquelle l'agent renforçant en est au moins un choisi dans le groupe constitué par le carbone blanc du procédé à sec, le carbone blanc du procédé au mouillé, la silice colloïdale et la silice précipitée.

20. Composition de caoutchouc diène selon l'une quelconque des revendications 16 à 18, dans laquelle la surface spécifique de la silice telle que déterminée par absorption d'azote (méthode BET) est dans la plage de 50 - 400 m²/g.

21. Composition de caoutchouc diène selon l'une quelconque des revendications 12 à 20, qui comprend en outre un agent de couplage au silane.

22. Composition de caoutchouc diène selon l'une quelconque des revendications 12 à 21, dans laquelle le rapport du caoutchouc terpolymère (A) à l'autre caoutchouc diène (B) devant être mélangé est 20: 80 à 80: 20 (en poids).

23. Composition de caoutchouc diène selon l'une quelconque des revendications 12 à 22, dans laquelle ledit autre caoutchouc diène (B) en est au moins un choisi dans le groupe constitué par le caoutchouc naturel, le caoutchouc polyisoprène, le caoutchouc copolymère styrène-butadiène, le caoutchouc polybutadiène, le caoutchouc copolymère styrène-isoprène et le caoutchouc copolymère butadiène-isoprène.
